Europäisches Patentamt

European Patent Office

Office européen des brevets

(19)

(11) Numéro de publication: **0 255 418 B1**

## FASCICULE DE BREVET EUROPEEN

(12)

(45) Date de publication de fascicule du brevet:
**29.05.91**

(51) Int. Cl.⁵: **H01H 3/50**, B60Q 1/42

(21) Numéro de dépôt: **87401495.4**

(22) Date de dépôt: **29.06.87**

(54) Dispositif d'indexation en particulier pour commutateur de véhicules automobiles.

(30) Priorité: **30.06.86 FR 8609470**

(43) Date de publication de la demande:
**03.02.88 Bulletin 88/05**

(45) Mention de la délivrance du brevet:
**29.05.91 Bulletin 91/22**

(84) Etats contractants désignés:
**DE ES GB IT**

(56) Documents cités:
**DE-A- 2 432 871**
**DE-A- 2 609 630**
**DE-A- 3 149 944**
**FR-A- 2 566 171**

(73) Titulaire: **JAEGER**
**2, rue Baudin**
**F-92303 Levallois-Perret(FR)**

(72) Inventeur: **Lagier, Daniel**
**135, rue des Ombraies**
**F-92000 Nanterre(FR)**

(74) Mandataire: **Martin, Jean-Jacques et al**
**Cabinet REGIMBEAU 26, Avenue Kléber**
**F-75116 Paris(FR)**

EP 0 255 418 B1

# Description

La présente invention concerne un dispositif d'indexation, en particulier mais non exclusivement pour la réalisation de dispositifs de commutation, notamment pour véhicules automobiles.

La présente invention concerne plus précisément un dispositif d'indexation relative de deux éléments, du type comprenant un poussoir d'indexation logé partiellement dans un alésage récepteur ménagé dans l'un des éléments et sollicité élastiquement vers l'extérieur de cet alésage contre une came d'indexage réalisée sur l'autre élément.

De nombreux dispositifs d'indexation de ce type ont déja été proposés, tels qu'illustrés par exemple dans la demande de brevet en FRANCE déposée le 15 juin 1984 sous le numéro 84 09388 par la demanderesse, ou encore dans les documents DE-2 335 379, 2 432 871 et GB-1 506 216.

Les dispositifs d'indexation du type précité jusqu'ici proposés ont rendu de grands services, mais présentent néanmoins divers inconvénients parmi lesquels on citera le manque de précision et le développement d'un bruit non négligeable lors de la commutation.

La présente invention a maintenant pour but de proposer un nouveau dispositif d'indexation du type précité qui, d'une part, soit plus précis que les dispositifs d'indexation jusqu'ici proposés et, d'autre part, produise moins de bruit lors de la commutation.

Ces différents buts sont atteints, dans le cadre de la présente invention, grâce à un dispositif d'indexation du type précité caractérisé par le fait que le poussoir d'indexation repose contre la paroi interne de l'alésage récepteur au niveau d'au moins une protubérance portée par un voile souple.

De préférence le voile souple, portant une protubérance sur sa surface extérieure, est formé sur le poussoir.

Néanmoins le voile souple précité peut être formé sur la paroi interne de l'alésage récepteur.

Ainsi, grâce à la structure proposée par la présente invention, le poussoir vient en appui constant contre la paroi interne de l'alésage récepteur au niveau des protubérances par déformation élastique des voiles souples et de ce fait, le poussoir est guidé en permanence avec précision dans l'alésage récepteur. Par ailleurs, grâce à l'appui constant défini entre le poussoir et la paroi interne de l'alésage récepteur au niveau des protubérances, le jeu entre le poussoir et l'alésage récepteur étant supprimé, le poussoir ne peut jamais venir heurter la paroi interne de l'alésage récepteur au cours de la commutation et ainsi on élimine tout bruit en cours de commutation.

De préférence, le poussoir repose contre la paroi interne de l'alésage récepteur par l'intermédiaire de deux protubérances séparées longitudinalement dans le sens de l'axe de l'alésage.

Selon une caractéristique avantageuse de l'invention, les voiles souples portant des protubérances sont définies en réalisant des évidements dans le corps du poussoir, en retrait de la surface extérieure de celui-ci.

D'autres caractéristiques, buts et avantages de la présente invention apparaîtront à la lecture de la description détaillée qui va suivre et en regard des dessins annexés donnés à titre d'exemple non limitatif et sur lesquels :

- la figure 1 illustre schématiquement la structure d'un dispositif d'indexation conforme à la présente invention,
- la figure 2 représente une vue en coupe longitudinale d'un poussoir d'indexation conforme à la présente invention selon un plan de coupe référencé II-II sur la figure 1,
- la figure 3 représente une vue latérale du même poussoir d'indexation selon une vue illustrée par la flèche référencée III sur la figure 1,
- la figure 4 illustre une vue agrandie des protubérances prévues sur la surface extérieure du poussoir, correspondant aux encadrés référencés IV sur la figure 1,
- la figure 5 représente une vue en bout du poussoir selon une vue illustrée par la flèche référencée V sur la figure 3, et
- la figure 6 représente une vue agrandie de la protubérance correspondant à l'encadré référencé VI sur la figure 5.

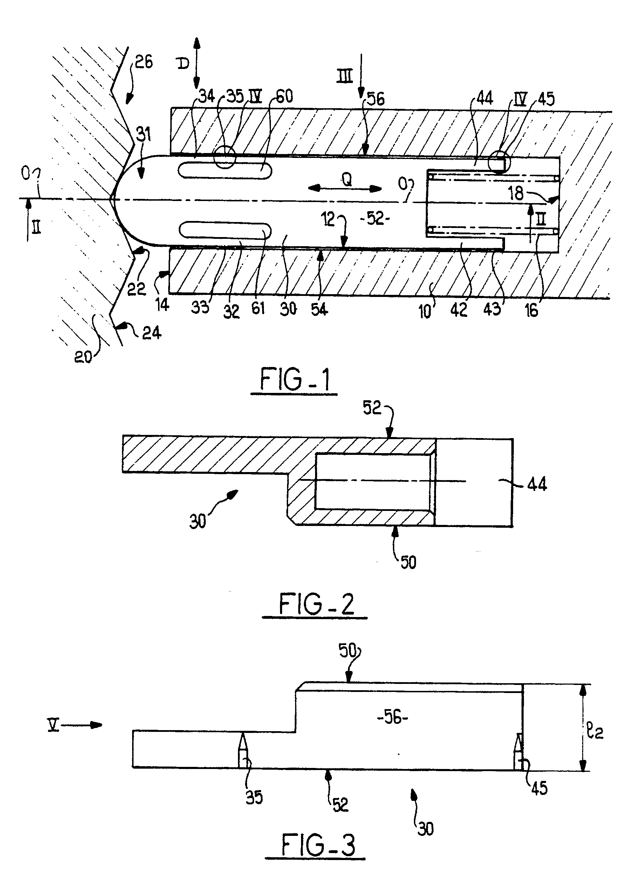

Pour l'essentiel, comme cela est représenté sur la figure 1, le dispositif d'indexation conforme à la présente invention comprend deux éléments 10, 20 susceptibles de déplacement relatif dans une direction générale illustrée par la flèche référencée D, c'est-à-dire parallèlement au plan de la figure 1, et un poussoir 30 d'indexation relative de ces deux éléments au cours de leur déplacement D.

L'élément 10 possède un alésage borgne 12 apte à recevoir le poussoir 30. L'alésage débouche sur la surface 14 de l'élément 10 qui fait face au second élément 20.

Ce dernier est muni d'une série de cames 22, 24,26 concaves en direction du poussoir 30. Celui-ci est poussé vers l'extérieur de l'alésage 12, c'est-à-dire vers les cames 22, 24, 26 de l'élément 20 par un ressort 16 intercalé entre le fond 18 de l'alésage 12 et le poussoir 30.

Selon la présente invention le poussoir 30 comprend des voiles souples 32, 34, 42, 44 portant sur leur surface extérieure des protubérances respectives 33, 35, 43,45 qui reposent contre la paroi interne de l'alésage récepteur 12.

Ainsi, comme indiqué précédemment, l'enveloppe externe du poussoir 30 s'adapte à la section de l'alésage récepteur 12, par fléchissement des voiles souples 32, 34, 42, 44 et repose en permanence contre la paroi interne de l'alésage récepteur 12 par l'intermédiaire des protubérances 33, 35, 43 et 45. De ce fait, le poussoir 30 est guidé avec précision dans l'alésage récepteur 12 lors de son déplacement référencé Q sur la figure 1 dans le sens de sollicitation du ressort 16 (soit parallèlement à l'axe O-O de l'alésage 12). On obtient donc une indexation précise de l'élément 10 par rapport à l'élément 20. De plus, le contact permanent des protubérances 33, 35, 43, 45 contre la paroi interne de l'alésage récepteur 12 évite tout choc du poussoir 30 contre la paroi interne de l'alésage récepteur 12 et élimine donc le bruit occasionné sur les dispositifs classiques lors de la commutation.

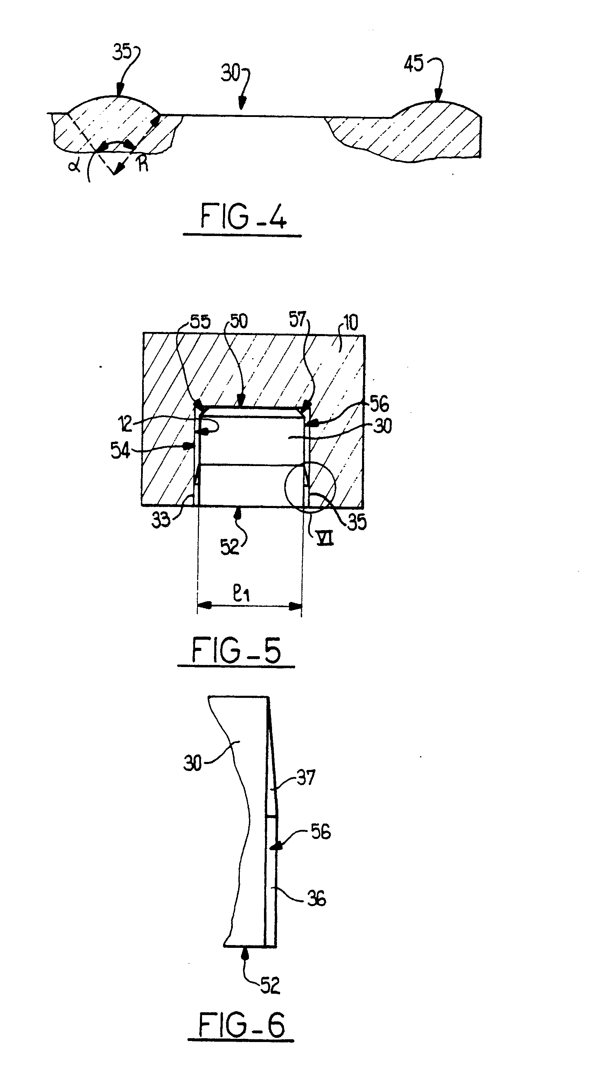

Selon le mode de réalisation représenté sur les figures (voir en particulier figure 5), le poussoir d'indexation 30 possède une section droite quadrangulaire dans un plan perpendiculaire à la direction de translation O du poussoir 30 dans l'alésage 12. L'enveloppe du poussoir 30 est ainsi définie par quatre surfaces principales parallèles deux à deux et orthogonales deux à deux, à savoir deux surfaces de base 50, 52 parallèles entre elles et deux surfaces latérales 54, 56 parallèles entre elles et orthogonales aux surfaces de base 50, 52 précitées.

Chacune des surfaces latérales 54, 56 est définie au moins partiellement par les voiles souples précités 32, 34, 42, 44 et possèdent sur sa surface extérieure une paire de protubérances 33, 43 d'une part, 35, 45 d'autre part, séparées longitudinalement dans le sens de l'axe O de l'alésage.

Les voiles souples 32, 34 portant les protubérances 33, 35 sont définis à proximité de la tête 31 du poussoir reposant contre l'élément 20. Les voiles 32, 34 sont définis en réalisant des évidements oblongs 60, 61 dans le corps du poussoir 30, en retrait de la surface extérieure de celui-ci. Selon le mode de réalisation représenté sur les figures, les évidements 60, 61 présentent, dans un plan parallèle aux surfaces de base 50, 52, une section droite oblongue allongée dans le sens de l'axe O de l'alésage récepteur 12.

Les évidements 60, 61 traversent l'épaisseur du poussoir 30 en reliant les surfaces de base 50 et 52 de celui-ci.

Les voiles souples 42, 44 sont définis au niveau de l'extrémité du poussoir 30 la plus proche du fond 18 de l'alésage récepteur 12.

Les voiles 42, 44 s'étendent parallèlement aux surfaces latérales 54, 56 du poussoir et prolongent ces dernières.

On remarquera à l'examen des figures annexées que d'une façon générale les protubérances 33, 35, 43, 45 s'étendant transversalement à l'axe O de l'alésage récepteur 12.

Plus précisément encore, selon le mode de réalisation représenté sur les figures, et comme cela apparaît en particulier sur la figure 5, l'alésage récepteur 12 ménagé dans l'élément 10 est ouvert latéralement afin de permettre d'engager le poussoir 30 dans l'alésage récepteur 12 selon un mouvement perpendiculaire à l'axe O de l'alésage 12, c'est-à-dire un mouvement perpendiculaire au plan de la figure 1.

Pour permettre cet engagement les faces latérales 54, 56 du poussoir 30 sont biseautées à proximité de la surface de base 50 comme référencé en 55, 57.

Par ailleurs, les protubérances 33, 35, 43, 45, qui pour l'essentiel sont formées de colonnes hémi-cylindriques, sont effilées en direction du bord d'engagement du poussoir dans l'alésage récepteur 12, c'est-à-dire effilées en direction de la surface de base 50.

Plus précisément encore, selon le mode de réalisation considéré actuellement comme préférentiel sur les figures, chacune des protubérances 33, 35, 43 et 45 est formée, comme illustré en vue agrandie sur la figure 6, d'un fût 36 délimité par une calotte sensiblement hémi-cylindrique centrée sur un axe transversal à l'axe de l'alésage 12, prolongée par une partie tronconique 37 effilée en direction du bord d'engagement du poussoir dans l'alésage.

On remarquera à l'examen des figures annexées que les protubérances 33, 35, 43 et 45 peuvent s'étendre sur une partie seulement de l'épaisseur du poussoir 30.

Ainsi, bien que selon le mode de réalisation précédemment décrit l'alésage récepteur 12 et le poussoir 30 possèdent deux sections droites quadrangulaires, en variante, l'alésage récepteur 12 et le poussoir d'indexation 30 peuvent posséder des sections droites circulaires. Dans ce cas, le poussoir 30 possède de préférence sur sa surface extérieure au moins deux protubérances délimitées par des surfaces d'enveloppe torroïdales, séparées longitudinalement dans le sens de l'axe de l'alésage et reposant contre la paroi interne de celui-ci.

La Demanderesse a réalisé des essais sur un dispositif d'indexation répondant aux dimensions suivantes:

- largeur l1 du poussoir 30 (soit la distance séparant les faces latérales 54, 56) : 5,8mm,
- épaisseur l2 du poussoir 30 (c'est-à-dire distance séparant les surfaces de base 50 et 52) : 5,5 mm,
- rayon R de courbure des protubérances 33, 35, 43, et 45 : 0,4 mm,
- angle $\alpha$ d'ouverture des protubérances 33, 35, 43, 45 : 90°.

Les essais réalisés par la Demanderesse ont été effectués sur un poussoir d'indexation réalisé en polyacétal homopolymère. Ces essais ont donné pleinement satisfaction.

Bien entendu le mode de réalisation particulier donné ci-dessus ne doit pas être considéré comme limitatif.

Comme indiqué précédemment, les voiles souples portant les protubérances en saillie peuvent être formés non pas sur le poussoir mais sur la paroi interne de l'alésage récepteur.

## Revendications

1. Dispositif d'indexation relative de deux éléments (10, 20), du type comprenant un poussoir d'indexation (30) logé partiellement dans un alésage récepteur (12) ménagé dans l'un des éléments et sollicité élastiquement vers l'extérieur de cet alésage contre une came d'indexage (22, 24, 26) réalisée sur l'autre élément (20), caractérisé par le fait que le poussoir d'indexation (30) repose contre la paroi interne de l'alésage récepteur (12) au niveau d'au moins une protubérance (33, 35, 43, 45) portée par un voile souple (32, 34, 42, 44).

2. Dispositif d'indexation selon la revendication 1, caractérisé par le fait que le voile souple (32, 34, 42, 44), portant une protubérance (33, 35, 43, 45) sur sa surface extérieure, est formé sur le poussoir.

3. Dispositif d'indexation selon la revendication 1, caractérisé par le fait que le voile souple (32, 34, 42, 44) portant une protubérance (33, 35, 43, 45) sur sa surface extérieure est formé sur la paroi interne de l'alésage récepteur (12).

4. Dispositif d'indexation selon l'une des revendications 1 à 3, caractérisé par le fait que le poussoir (30) repose contre la paroi interne de l'alésage récepteur (12) par l'intermédiaire de deux protubérances (33, 43 ; 35, 45) séparées longitudinalement dans le sens de l'axe (0) de l'alésage (12).

5. Dispositif d'indexation selon l'une des revendications 1, 2 ou 4, caractérisé par le fait que l'alésage récepteur (12) et le poussoir (30) possèdent des sections droites quadrangulaires et par le fait que le poussoir (30) possède sur deux surfaces latérales opposées (54, 56), une paire de protubérances (33, 43 ; 35 ; 45) séparées longitudinalement dans le sens de l'axe (0) de l'alésage, reposant contre la paroi interne de l'alésage récepteur (12).

6. Dispositif d'indexation selon l'une des revendications 1, 2 ou 4, caractérisé par le fait que l'alésage récepteur (12) et le poussoir d'indexation (30) possèdent des sections droites circulaires et que le poussoir (30) possède sur sa surface extérieure au moins deux protubérances séparées longitudinalement dans le sens de l'axe de l'alésage (12), reposant contre la paroi interne de celui-ci.

7. Dispositif d'indexation selon l'une des revendications 1, 2 et 4 à 6, caractérisé par le fait que le poussoir (30) comprend au moins un voile souple (42, 44) équipé d'une protubérance (43, 45) sur son extrémité la plus proche du fond de l'alésage récepteur (12).

8. Dispositif d'indexation selon l'une des revendications 1 à 7, caractérisé par le fait que les voiles souples (32, 34) portant des protubérances (33, 35) sont définis en réalisant des évidements (60, 61) en retrait de la surface extérieure du poussoir ou de l'alésage récepteur.

9. Dispositif d'indexation selon l'une des revendications 1 à 8, caractérisé par le fait que les protubérances (33, 35 ; 43, 45) s'étendent transversalement à l'axe (0) de l'alésage (12).

10. Dispositif d'indexation selon l'une des revendications 1 à 9, caractérisé par le fait que les protubérances (33, 35 ; 43, 45) possèdent une enveloppe cylindrique ou torroïdale.

11. Dispositif d'indexation selon l'une des revendications 1 à 10, caractérisé par le fait que les protubérances (33, 35, 43, 45) sont effilées en direction du bord d'engagement du poussoir (30) dans l'alésage récepteur (12).

## Claims

1. Two-member relative indexing means (10, 20), of the type comprising an indexing push-button (30) partly housed in an enclosing bore (12) in one of the members and elastically stressed towards the exterior of this bore against an indexing cam (22, 24, 26) provided on the other member (20), characterised in that the indexing push-button (30) rests against the inner wall of the enclosing bore (12) at the position of at least one protuberance (33, 35, 43, 45) borne by a flexible web (32, 34, 42, 44).

2. Indexing means according to claim 1, characterised in that the flexible web (32, 34, 42, 44)

**EP 0 255 418 B1**

bearing one protuberance (33, 35, 43, 45) on its outer surface is formed on the push-button.

3. Indexing means according to claim 1, characterised in that the flexible web (32, 34, 42, 44) bearing a protuberance (33, 35, 43, 45) on its outer surface is formed on the inner wall of the enclosing bore (12).

4. Indexing means according to one of claims 1 to 3, characterised in that the push-button (30) rests against the inner wall of the enclosing bore (12) through two protuberances (33, 43; 35, 45) which are separated longitudinally in the direction of the axis (0) of the bore (12).

5. Indexing means according to one of claims 1, 2 or 4, characterised in that the enclosing bore (12) and the push-button (30) have right quadrangular cross-sections and in that the push-button (30) has a pair of protuberances (33, 43; 35, 45) on the two opposing lateral surfaces (54, 56), separated longitudinally in the direction of the axis (0) of the bore and resting against the inner wall of the enclosing bore (12).

6. Indexing means according to one of claims 1, 2 or 4, characterised in that the receiving bore (12) and the indexing push-button (30) have circular cross-sections and in that the push-button (30) has at least two protuberances on its outer surface which are separated longitudinally in the direction of the axis of the bore (12) and rest against the inner wall thereof.

7. Indexing means according to one of claims 1, 2 and 4 to 6, characterised in that the push-button (30) includes at least one flexible web (42, 44) fitted with a protuberance (43, 45) on its end closest to the base of the enclosing bore (12).

8. Indexing means according to one of claims 1 to 7, characterised in that the flexible webs (32, 34) bearing protuberances (33, 35) are defined by providing depressions (60, 61) in the outer surface of the push-button or the enclosing bore.

9. Indexing means according to one of claims 1 to 8, characterised in that the protuberances (33, 35; 43, 45) extend transversely to the axis (0) of the bore (12).

10. Indexing means according to one of claims 1 to 9, characterised in that the protuberances (33, 35; 43, 45) have a cylindrical or toroidal envelope.

11. Indexing means according to one of claims 1 to 10, characterised in that the protuberances (33, 35, 43, 45) are tapered in the direction of the edge engaging the push-button (30) in the enclosing bore (12).

**Ansprüche**

1. Indexiervorrichtung zum Indexieren von Stellungen zwischen zwei Elementen (10, 20) der Bauart mit einem Indexierstößel (30), der teilweise in einer Aufnahmebohrung (12) in einem der Elemente untergebracht und elastisch aus dieser Bohrung gegen eine Indexiernockenvorrichtung (22, 24, 26) gedrückt ist, welche am anderen Element (20) vorgesehen ist, **dadurch gekennzeichnet,** daß der Indexierstößel (30) an der Innenwand der Aufnahmebohrung (12) auf der Höhe mindestens eines Vorsprunges anliegt, welcher von einem weichen, dünnwandigen Stützteil (32, 34, 42, 44) abgestützt ist.

2. Indexiervorrichtung nach Anspruch 1, **dadurch gekennzeichnet,** daß das weiche, dünnwandige Stützteil (32, 34, 42, 44), welches an seiner Außenfläche einen Vorsprung (33, 35, 43, 45) trägt, am Stößel ausgebildet ist.

3. Indexiervorrichtung nach Anspruch 1, **dadurch gekennzeichnet** daß das weiche dünnwandige Stützteil (32, 34, 42, 44), welches an seiner Außenfläche einen Vorsprung (33, 35, 43, 45) trägt, an der Innenwand der Aufnahmebohrung (12) ausgebildet ist.

4. Indexiervorrichtung nach einem der Ansprüche 1 bis 3, **dadurch gekennzeichnet** daß der Stößel (30) an der Innenwand der Aufnahmebohrung (12) über zwei Vorsprüngen (33, 43; 35, 45) anliegt, welche in Längsrichtung längs der Achse (0) der Bohrung (12) im Abstand angeordnet sind.

5. Indexiervorrichtung nach einem der Ansprüche 1, 2 oder 4, **dadurch gekennzeichnet** daß die Aufnahmebohrung (12) und der Stößel (30) viereckigen Querschnitt besitzen und daß der Stößel (30) an zwei entgegengesetzten Seitenflächen ein Paar Vorsprünge (33, 43; 35, 45) besitzt, die in Längsrichtung längs der Achse 0 der Bohrung im Abstand angeordnet sind und an der Innenwand der Aufnahmeboh-

5

rung (12) anliegen.

6. Indexiervorrichtung nach einem der Ansprüche 1, 2 oder 4, **dadurch gekennzeichnet** daß die Aufnahmebohrung (12) und der Indexierstößel (30) kreisförmigen Querschnitt haben und daß der Stößel (30) an seiner Außenfläche mindestens zwei in Längsrichtung längs der Achse der Bohrung (12) im Abstand angeordnete Vorsprünge aufweist, die an deren Innenwand anliegen.

7. Indexiervorrichtung nach einem der Ansprüche 1, 2 und 4 bis 6, **dadurch gekennzeichnet** daß der Stößel (30) mindestens ein weiches, dünnwandiges Stützteil (42, 44) aufweist, das an seinem dem Grund der Aufnahmebohrung (12) nächstgelegenen Ende mit einem Vorsprung (43, 45) versehen ist.

8. Indexiervorrichtung nach einem der Ansprüche 1 bis 7, **dadurch gekennzeichnet** daß die weichen, dünnwandigen Stützteile (32,34) welche die Vorsprünge (33, 35) tragen, durch Ausbildung von Hohlräumen (60, 61) innerhalb der äußeren Oberfläche des Stößels oder der Aufnahmebohrung geschaffen sind.

9. Indexiervorrichtung nach einem der Ansprüche 1 bis 8, **dadurch gekennzeichnet** daß die Vorsprünge (33,35;43,45), quer zur Achse 0 der Bohrung (12) verlaufen.

10. Indexiervorrichtung nach einem der Ansprüche 1 bis 9, **dadurch gekennzeichnet** daß die Vorsprünge (33,35;43,45) eine zylindrische oder toroidale Eihhüllende aufweisen.

11. Indexiervorrichtung nach einem der Ansprüche 1 bis 10, **dadurch gekennzeichnet** daß die Vorsprünge (33,35;43,45) in Richtung der Angreifkante des Stößels (30) in der Aufnahmebohrung (12) verjüngt sind.

FIG-1

FIG-2

FIG-3

FIG-4

FIG-5

FIG-6